# EUROPEAN PATENT SPECIFICATION

(11) **EP 2 504 748 B1**
(45) Date of publication and mention of the grant of the patent: **30.05.2018**
(21) Application number: 09851543.0
(22) Date of filing: 23.11.2009
(51) Int. Cl.: G06F 8/34, G06F 11/36, G06F 9/451, G06F 9/44

(54) **SYSTEM AND METHOD FOR OBJECT RELATIONSHIP IDENTIFICATION IN A USER INTERFACE**
SYSTEM UND VERFAHREN ZUR IDENTIFIZIERUNG VON OBJEKTBEZIEHUNGEN BEI EINER BENUTZERSCHNITSTELLE
SYSTÈME ET PROCÉDÉ D'IDENTIFICATION DE RELATION D'OBJET DANS UNE INTERFACE UTILISATEUR

(43) Date of publication of application: 03.10.2012
(73) Proprietor: EntIT Software LLC, Sunnyvale, California 94089 (US)
(72) Inventor: AMICHAI, Nitsan, 56100 Yehud (IL); POGREBISKY, Michael, 56100 Yehud (IL); SHUFER, Ilan, 56100 Yehud (IL); LENEDEV, Alexei, 56100 Yehud (IL); SCHWARTZ, Dror, 56100 Yehud (IL); COHEN, Ayal, 56100 Yehud (IL); SAARONI, Dror, 56100 Yehud (IL)
(74) Representative: HGF Limited
(86) International application number: PCT/US2009/065590
(87) International publication number: WO 2011/062597

(56) References cited:
- US-A1- 2004 100 502
- US-A1- 2004 100 502
- US-A1- 2004 107 415
- US-A1- 2004 107 415
- US-A1- 2007 203 868
- US-A1- 2009 133 000
- US-A1- 2009 133 000
- US-B1- 7 272 822
- US-B1- 7 272 822

## Description

### BACKGROUND

Software automation can be used to simulate a human user's interactions with a software application and to repeat tasks recorded into a script by a human user. Software automation developers and testers can write automation programs that work on a variety of applications and the user interfaces (UIs) of applications. The automation programs can use the applications and UIs during the playback of recorded automation scripts just as a human user would use the applications. Objects in the UIs can be identified and included in the recorded scripts to enable the performance of the application functions.

A developer, tester, or user may generate or create an automation model and scripts by "recording" the user's interaction with the application. The user may interact with the application by using objects in the application's user interface (UI) which results in an automation script when the automation application is in recording mode. Another way to generate the scripts can be for the user to program the user's interaction or to enter the desired commands and keystrokes with a selection device (e.g., a computer mouse) in order to program the equivalent to the user's desired actions.

Software automation may be used in a software testing tool like an application function testing tool (e.g., HP Quick Test Pro), a performance or load testing tool (e.g., HP Loadrunner), or a security tool (e.g., HP Web Inspect). Automation testing may test application functions, application loading, network interaction, security, client-server applications, or the UI.

US Patent Application number US 2004/100502 A1 discloses a method and apparatus that applies an action to a software application by determining a target object for the input action, which is determined by identifying the target object through identification of object information relative to a reference object. Finally, the input action is applied to the target object.

### BRIEF DESCRIPTION OF THE DRAWINGS

FIG. 1 is an illustration of a display, an input device, and recorder module in accordance with an embodiment;
FIG. 2 is an illustration of a target object and a unique object in a table in a user interface (UI) in accordance with an embodiment;
FIG. 3A is an illustration of a target object and a unique object in a user interface (UI) in accordance with an embodiment;
FIG. 3B is an illustration of a target object, an intermediate object, and a unique object in a user interface (UI) in accordance with an embodiment;
FIG. 3C illustrates a more specific example of using an intermediate object reference in an embodiment;
FIG. 3D is an illustration of a target object and a plurality of objects having unique attributes in a user interface (UI) in accordance with an embodiment;
FIG. 4A is a flowchart illustrating a method for identifying a target object in a script used to access a user interface (UI) in accordance with an embodiment;
FIG. 4B is a flowchart illustrating a method for identifying a target object in a script used to access a user interface (UI) and notifying a user in accordance with an embodiment;
FIG. 5 is an illustration of a script used to test software in accordance with an embodiment; and
FIG. 6 is a flowchart illustrating a method for identifying a target object in a script used to access a user interface (UI) in accordance with an embodiment.

### DETAILED DESCRIPTION

Alterations and further modifications of the inventive features illustrated herein, and additional applications of the principles of the inventions as illustrated herein, which would occur to one skilled in the relevant art and having possession of this disclosure, are to be considered within the scope of the invention. The same reference numerals in different drawings represent the same element.

A software automation system may include an automation model and a repository of actions recorded in automation scripts that the automation system performs. The automation model may identify the target objects to which recorded actions can be applied. For example, when working with a web interface, if the desired automation action is a button click, the automation model can store the text displayed on the button in order to identify the button object to be acted upon.

Being able to uniquely identify an object in an automation environment enables the desired testing functions to be applied to the correct objects. Object identification can use different methods to identify objects depending on the UI environment used. During the process of object identification, an object that is found but does not have any uniquely identifiable attributes may cause the automation scripts to malfunction or create other unexpected results.

As discussed, one method of object identification is identifying objects by a viewable attribute. For example, in web applications, the links can be identified by the displayed text. However, many objects on the screen share common properties in the UI, so the target object may not be uniquely identified or differentiated the similar objects in the UI. Ordinal numbers can be used to count or index the target object relative to similar objects, but ordinal numbers can be unreliable because the objects may appear in a different order on different runs of the automation script.

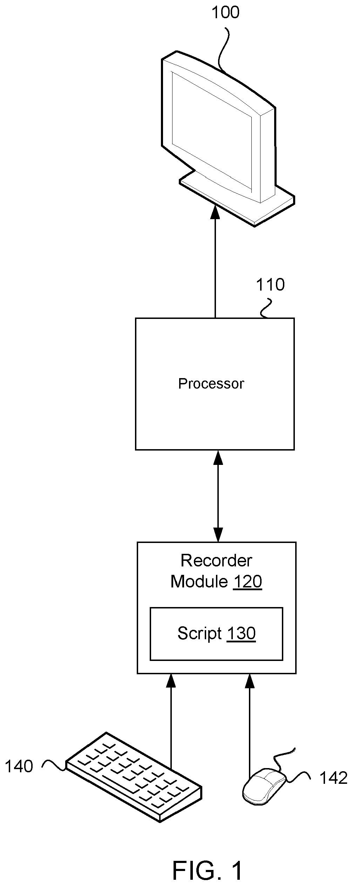

As illustrated in FIG. 1, objects in the application's user interface (UI) may be displayed on a display 100. A user may enter a command to select objects, including a target object or unique object, using an input device 140 or select the objects with a selection device 142. The input device may be a computer keyboard, voice recognition device, selection device, or other similar device. The selection device may be a computer mouse, touch screen, electronic pen, or other similar device. A recorder module 120 may be used to record the user's actions with the input device or the selection device. The recorder device may record the actions in a script 130 that may be executed later as a part of an automation script playback. A processor 110 may be used to run the automation application (e.g., test application), generate the UI on the display, process the user's actions from the input device or the selection device, and run the script. The recorder device and the processor may be included within a user device.

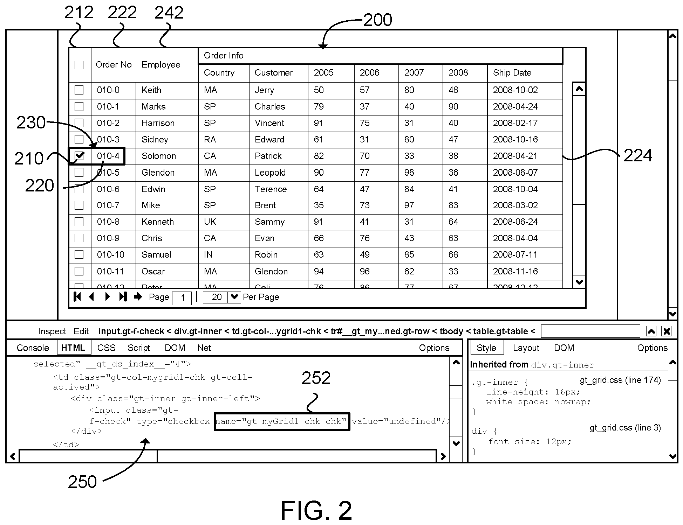

A system and method may be used to identify a target object that shares common properties with similar objects or that may not be uniquely indentified as compared to other similar objects. As illustrated in FIG. 2, a grid or table in a UI 200 may include a first column or a checkbox column 212 containing checkboxes. All of the checkbox elements in the grid may share the same UI or HTML attributes and properties. A user may select a target object 210 represented by a fifth checkbox and associated with order number 010-4 220 in the UI. Identification of the fifth checkbox may include a description that contains the index 5 to identify the target object from similar checkboxes. If the grid is generated from dynamic data that can change with time, then the target object may move position or be reordered, so target object identification associated with the index 5 may select an object other than the target object associated with order number 010-4. Using ordinal numbers to identify the target object may be unreliable when data moves position on the UI.

Applications can generate many user interface (UI) objects that are not uniquely identifiable as compared to other similar objects. Database enabled web applications are an example of applications susceptible to this problem. Since a target object or object selected by a user might not be uniquely identifiable, other objects with unique characteristics related to the target object or in close proximity to the target object may be used in the identification of the target object. Referring to FIG. 2, order number 010-4, the text 220 found right next to the target checkbox 210 in the target row 224 and in the Order No. column 222, may be unique in the table or the UI and may be used to identify the target checkbox. The order number 010-4 may be aligned with the checkbox even if the table is re-aligned because the target checkbox may be associated with the unique order number 010-4 in a relationship 230. This object relationship can be defined by an underlying database, and so the relationship is unlikely to change. Other objects related to the target may not have unique attributes, like the employee name "Solomon" in the Employee column 242 and the target row because there may be individuals with duplicate names.

A tool may be used to view the underlying source code generating the UI. Referring to FIG. 2, a UI code viewer tool 250 may display the target object's source code 252 and the attributes used to generate the target object. The code generation tool may display the source code and attributes for a unique object, similar objects, or other objects. The UI code generation tool may display other views and panes to assist in identification of the target object and unique object and relationship between the target object and unique object.

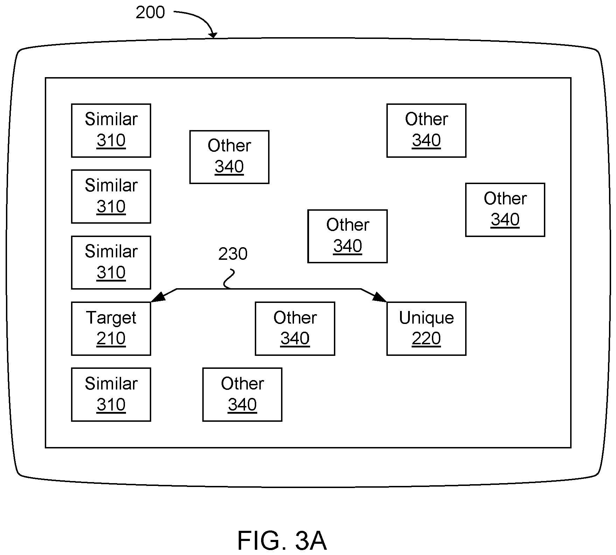

As illustrated in FIG. 3A, the UI 200 may have many objects displayed. Some objects called unique objects 220 may have unique characteristics as compared to other objects 340, target objects 210, and similar objects 310 in the UI. However, some objects may have characteristics common to similar objects in the UI. In other words, some objects may have characteristics or attributes undifferentiated or indistinguishable from similar objects in the UI. A target object may be an undifferentiated object from other similar objects in a UI page. A method or system may be used to identify a target object or undifferentiated object in the UI from objects that may have similar attributes, characteristics, values, or text as objects. An object's attributes or characteristic may include color, font, position, fill, text, names, values, graphics, hyperlinks, animation characteristics, or other features used to generate the object's appearance or position in the UI. A unique object's attribute may include a value attribute of the unique object in a markup language or a text description of the unique object. The target object or unique object may include a button, checkbox, text box, or drop-down menu.

The user may select a target object 210 for use in a script. When a target object is selected in the UI, an application, automation tool, script generation tool, or testing tool running on a processor may check the target object for unique attributes against the other objects in the UI. The other objects can include the unique object, similar objects 310, and other objects 340 in the UI 200. The method can check the target object to make sure no other object on the UI has attributes similar to or in common with the target object attributes. When the target object has attributes common to at least one other object in the UI, the user may be notified of the target object's lack of unique attributes. A window may be launched to provide the user notification.

A unique object 220 with unique attributes in the UI 200 may be identified. The unique object may be used as a reference object when the target object 210 lacks unique attributes. The identification of the unique object in the UI may be selected by a user. A user maybe able to visually determine the objects likely to have unique characteristics or the user may be able to determine visually which objects have a relationship with the target object. The method, system, or tool may notify the user of multiple objects with unique attributes so the user can select among the objects with unique attributes.

A relationship 230 may be defined between the unique object 220 (reference object) identified and selected and the target object 210. A relationship as used here is defined as a linkage, reference, or similar connection between the two objects. The relationship may be recorded in a script configured to uniquely identify the target object. The relationship between the reference object and the target object maybe maintained when other objects are repositioned and reordered in the UI.

In certain embodiments, the relationship maybe defined by a structure of the UI. The structure of the UI maybe a hierarchal structure, a data structure, a language or code structure, or a tree structure. Additionally, the relationship may be defined based on a visual representation or visual structure of the UI, defined by a source code hierarchy of the UI, defined by a visual proximity relationship in the UI, defined by a development tool repository relationship recognized by a tool used to create the UI, or defined by a static relationship in the UI.

The unique object with the relationship to the target object may be identified or selected by a pattern recognition process. For example, a graphical or textual pattern recognition process may be used. The pattern recognition process may operate on a grid or table. The pattern recognition process may indentify the unique object in a same row as the target object. The unique object maybe unique or have unique attributes to other objects in a same column as the unique object. The relationship between the unique object and the target may be defined by the row, and the unique object may be unique in the unique object's column. In another configuration, the pattern recognition process may indentify the unique object in a same column as the target object. The unique object may be unique or have unique attributes to other objects in a same row as the unique object. The relationship between the unique object and the target may be defined by the column, and the unique object may be unique in the unique object's row.

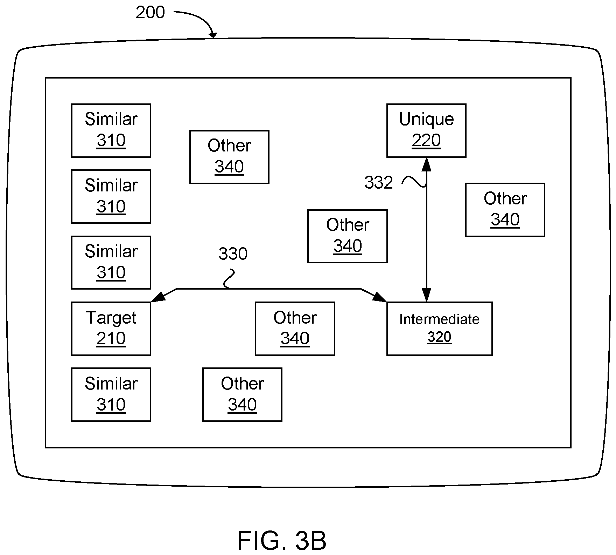

In another embodiment as illustrated in FIG. 3B, the unique object 220 used as a reference object may be identified by including a second target object or an intermediate reference object 320. The relationship between the unique object and the target object 210 may include the intermediate reference object as a link between the target object and the reference object. The second target object, called an intermediate reference object, may lack unique attributes. The intermediate reference object maybe identified. A unique-intermediate relationship 332 between the unique object and the intermediate reference object may be defined. The unique object may reference the intermediate reference object or the intermediate reference object may reference the unique object. An intermediate-target relationship 330 between the intermediate reference object and the target object may be defined. The intermediate reference object may reference the target object or the target object may reference the intermediate reference object. The relationship between the target object and the unique object may be defined by the unique-intermediate relationship and the intermediate-target relationship. The method may include a plurality of intermediate objects which may be linked together with the target object on one end of the chain or linked relationships and the unique object on another end of the chain or linked relationships. Referencing the target object using intermediate reference objects to identify the unique object and to define the relationship maybe performed or referenced recursively by adding any number of additional intermediate reference objects to a relationship chain until a unique relationship can be formed between the target object and the intermediate object.

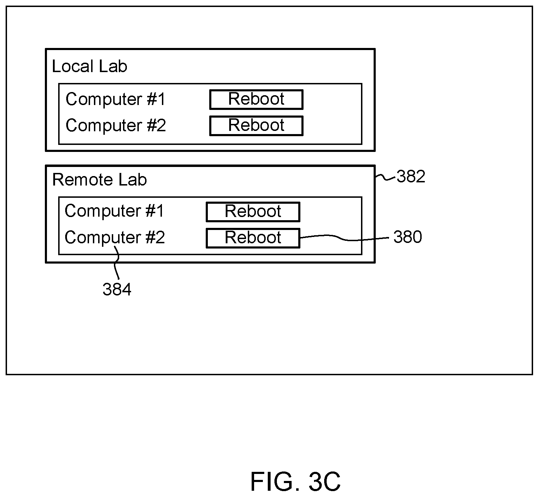

An example of using an intermediate reference object is illustrated in FIG. 3C. The target object may be a reboot button in a software application configured to manage multiple test machines in a network testing environment. A user may desire to uniquely identify and record the clicking of the reboot button 380 for test computer #2 in the remote lab panel 382. In this example, there are four non-unique reboot buttons on the application screen. However, the desired reboot button can be referenced using two reference objects in this window. The first reference object is the computer #2 label 384. Because this label is not unique in the window (see computer #2 in the local lab panel), then a further linkage reference can be made to the remote lab panel 382 which is the unique object. This makes the computer #2 label the intermediate reference object and this enables the reboot button to be uniquely identified.

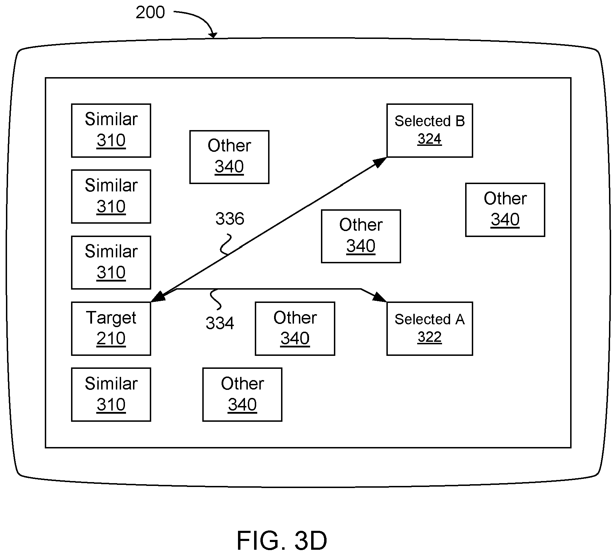

In another configuration as illustrated in FIG. 3D, the unique object may include a plurality of objects. The combination of the plurality of objects may have unique attributes. For example, a selected object A 322 may not have unique attributes as compared to at least one other object in the UI, and a selected object B 324 may not have unique attributes as compared to at least one other object in the UI, but the combination of the selected object A and the selected object B may have unique attributes as compared to other objects in the UI. The relationship between the unique object and the target object 210 may include a plurality of relationships. A relationship may be defined between each object in the plurality of objects and the target object and the relationship (not shown in FIG. 3D) may be defined between each object in the plurality of objects and another object in the plurality of objects. For example, a selected object A-to-target relationship 334 maybe defined between selected object A and target object. A selected object B-to-target relationship 334 may be defined between selected object B and target object.

After the relationship is defined and recorded, the script may be used to access the target object in the UI. The unique object with unique attributes may be found in the UI. The unique object may be defined or described in the script. A processor may determine the relationship between the target object and the unique object. The relationship of the target object and the unique object (reference object) may be defined or described in the script. The target object in the UI may be accessed based on the relationship with the reference object.

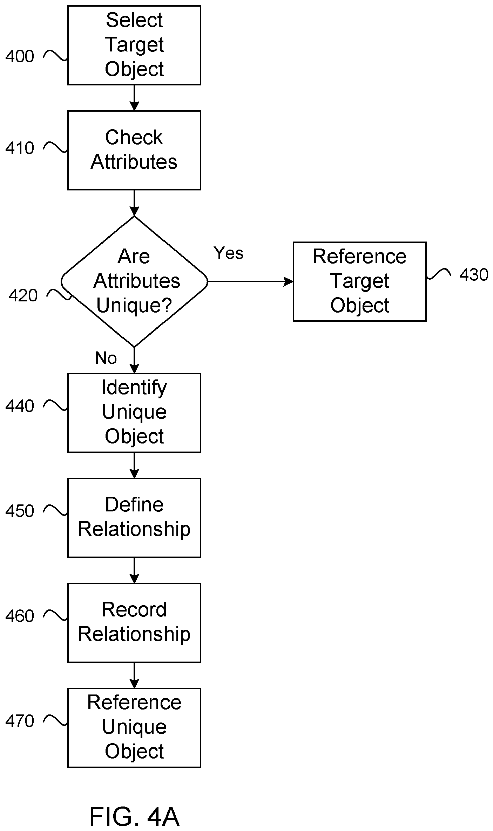

In another embodiment as illustrated in FIG. 4A, the user or a mechanism may select a target object 400 for use in a script. The mechanism used in the method or system may check attributes 410 of the target object for unique attributes against the attributes of other objects in the UI. A decision may be made regarding whether the target attributes are unique, as in block 420. If the target object has unique attributes, then the script can reference the target object 430 directly to access the target later in an automated script execution. If the target object has attributes in common with at least one other object in the UI or does not have unique attributes as compared to other objects in the UI, then a unique object 440 may be identified which can be related to the target object. The unique object may have unique attributes in the UI. The unique object may be used as a reference object when the target object lacks unique attributes. A relationship may be defined 450 between the unique object or reference object identified and the target object selected. The relationship can be recorded 460 in a script configured to uniquely identify the target object. The script may reference the unique object 470 so the target object may be accessed later by the script in the automated script execution. The relationship may be a link to the target object or element in the UI. The tool may first identify the unique element, and then may move to the desired target element through the relationship link.

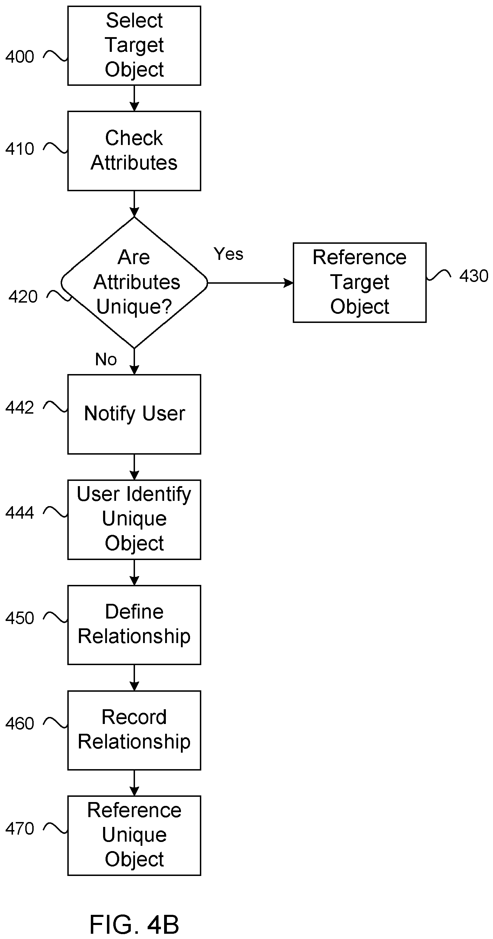

In another configuration as illustrated in FIG. 4B, the user or a mechanism may select a target object 400 for use in a script. The mechanism used in the method or system may check attributes 410 of the target object for unique attributes against the attributes of other objects in the UI. A decision may be made regarding whether the target attributes are unique, as in block 420. If the target object has unique attributes, then the script can reference the target object 430 directly to access the target later in an automated script execution. If the target object has attributes in common with at least one other object in the UI or does not have unique attributes from other objects in the UI, then the user may be notified 442 that the target object may not be unique or have unique attributes.

The automation system may then instruct the user to identify a unique object 444. The user may mark or select unique text or a unique object. A potential unique object or a probative unique object selected by the user may be checked to verify uniqueness or unique attributes. If the potential unique object or the probative unique object is unique or has unique attributes, then the potentially unique object or the probative unique object may become the unique object used to reference the target object. If the potentially unique object or the probative unique object is not unique, the potentially unique object or the probative unique object may be an intermediate reference object, a contributing object of a unique object formed by a plurality of objects, and/or the user may be instructed to select a different unique object. A relationship 450 may be defined between the unique object or reference object identified and the target object selected. The relationship 460 may be recorded in a script configured to uniquely identify the target object. The script may reference the unique object 470 so the target object may be accessed later by the script in automated script execution.

In another embodiment, a method may be used to identify a test object that may be undifferentiated from other similar objects in a user interface (UI). The method may use a test script to access the test object. The user may select a target test object for use in the test script. A testing tool running on a processor may check the target test object for unique attributes against the other objects in the UI 200 to verify the target test object has unique attributes as compared to attributes common to other objects in the UI. A unique object with unique attributes in the UI may be identified. The unique object may be used as a reference object when the target object lacks unique attributes. A relationship may be defined between the unique object or reference object identified and the target test object selected. The relationship may be recorded in the test script configured to uniquely identify and access the target test object.

In another configuration referring back to the illustration in FIG. 1, a system may be used for identifying a target object in a script used to access a user interface (UI). A display 100 may be used for displaying the UI. An input device 140 and 142 may be used by a user for selecting target objects in the UI. A processor 110 may be configured to: check a target object for unique attributes as compared to attributes common to at least one other object in the UI, identify a unique object with unique attributes in the UI as a reference object when the target object lacks unique attributes, and define a relationship between the reference object and the target object. A recorder module 120 may be configured to store the relationship between the reference object and the target object in a script 130 and to execute the script. The processor may be configured to find the unique object with unique attributes in a UI, to determine the relationship of the target object to the unique object, and to select the target object in the UI based on the relationship with the unique object. The system may be used in automated software testing.

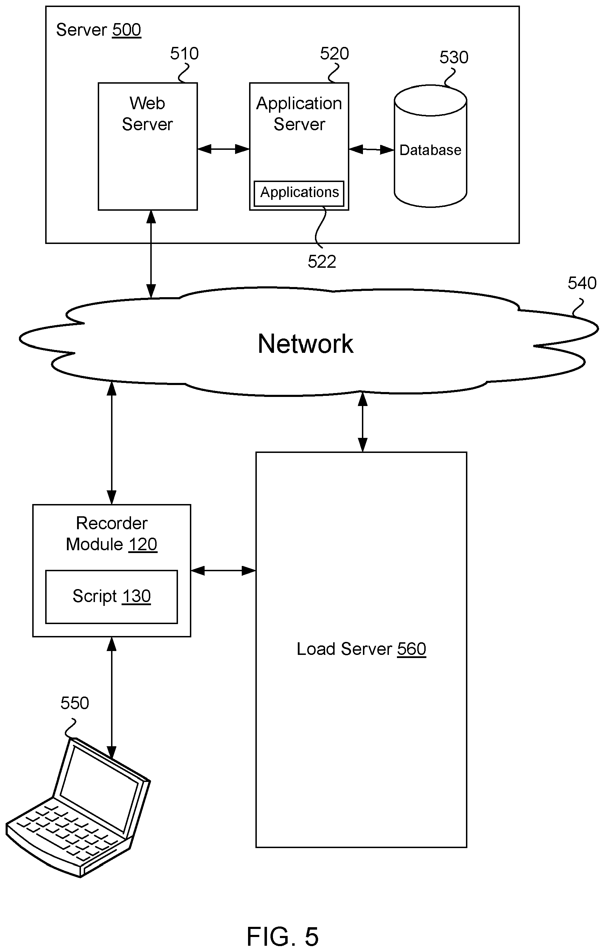

As illustrated in FIG. 5, a script 130 previously recorded on a recorder module 120 may be run on a user device 550 or may be loaded onto a load server 560. The script can contain the target objects that are uniquely identified using unique objects and relationships. The load server may use virtual clients to duplicate the instructions or actions of the script to test network access or security capabilities of a network 540 or the functionality or loading of a server 500, a web server 510, an application server 520, web applications 522 in the application server, and/or a database 530. The server may include the web server, the application server, or the database. The user device may control the functionality, operation, or processing of the load server or the recorder module.

The programming language used to generate the UI may include a markup language, scripting language, style sheet language, style language, operating system language, or programming language. The language used to generate the UI may include HyperText Mark-up Language (HTML), Extensible Markup Language (XML), Extensible HyperText Markup Language (XHTML), Standard Generalized Markup Language (SGML), Generalized Markup Language (GML), JavaScript, Java, AJAX, Adobe™ Flex, Microsoft™ .NET, Cascading Style Sheets (CSS), Script, Berkeley Software Distribution (BSD), Mac OS X, GNU/Linux, SunOS, or Windows. The UI may include a graphical user interface (GUI), object-oriented user interface (OOUI), web-based user interfaces, or web user interfaces (WUI).

In another embodiment, the user may assist in an object identification process by directing the automation tool to another related object in the UI of the application. The user may decide to point to an object that the user believes is more unique in the application data context than using the target object alone. The user may decide to create a relationship during any stage of the automation model and script development, so a relationship may be changed. A new unique object and new relationship to a target object may replace an existing unique object and existing relationship to a target object.

The method may be illustrated by an example. A user may record an automation test case for an application. For a certain action on a UI element, the automation process may attempt to find a unique description of the target object performing the action based on the object properties. If the process fails to generate uniqueness with any object or element in the test case, a message may be displayed to the user. The user can then take control and point out another object in the application that is believed to be unique using an input device. The tool may generate a relationship description for the non-unique target object in the test case. In other words, the relationship allows the automation process to find an object X by first finding an object Y using some description, then finding object X based on object X's relationship to object Y. The process may be repeated as desired to generate a chain of objects.

As discussed before, the relationship description may use different types of relationship types. An application structural relationship maybe used when the UI objects are based on some hierarchical data structure in the application. The relationship may be a path in the structure. For example, for web interfaces, the relationship may be a Document Object Model (DOM) path. A UI proximity relationship may be used when the UI objects are based on the position of the objects as they appear in the UI. For example, the object X may be located to the left from the object Y. As mentioned before, a tool repository relationship may be also be used when a relationship to another object is recognized by the tool.

A result of the method and system enables an ad-hoc creation of complex object identification using without writing complex rules. In addition, the object identification may be robust, as the unique object pointed by the user may be "stable" because the unique object may have a unique set of properties, which do not change every time the application is invoked or modified. Moreover, the method and system may appeal to users because the complex operations of identifying and comparing the object properties may be performed automatically, and the user may only assist the process by pointing out the unique object, which may be a simple operation. Finding a unique object description or attributes may make the script robust because the unique object description or attributes can provide a good identification that does not change over time. For example, if an application uses a database, the method can work better than ordinal or index numbers which can change when underlying database entries change creating an offset value that does not access the target object when database tables increase or decrease in size.

Object identification can be a beneficial component in software automation. Object identification may be used to uniquely identify a certain object in the UI of a software application. Many objects on the screen or UI may share a similar set of identification properties. The technology provides for object identification by allowing a user to point out another object on the display which will be used to identify a target object. The identification of the target object may be a multi-phase process. First, identify the reference object using any object identification method then follow the relation(s) defined by the user to identify the intended object.

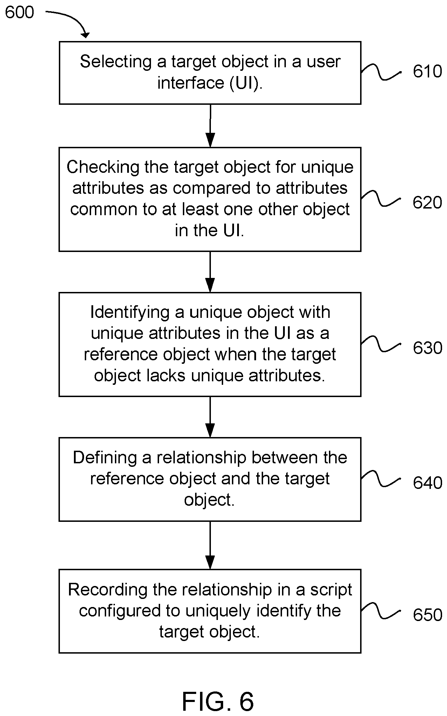

Another embodiment provides a method 600 for identifying an undifferentiated object in a script used to access a user interface (UI), as shown in the flow chart in FIG. 6. The method includes the operation of selecting 610 a target object in a UI. The operation of checking 620 the target object for unique attributes as compared to attributes common to at least one other object in the UI follows. The next operation of the method may be identifying 630 a unique object with unique attributes in the UI as a reference object when the target object lacks unique attributes.

The method 600 further includes defining 640 a relationship between the reference object and the target object. The operation of recording 650 the relationship in a script configured to uniquely identify the target object follows.

The method and system for identifying an undifferentiated object in a script used to access a user interface (UI) may be implemented using a computer readable medium having executable code embodied on the medium. The computer readable program code may be configured to provide the functions described in the method above. The computer readable medium may be a RAM, ROM, EPROM, floppy disc, flash drive, optical drive, magnetic hard drive, or other medium for storing electronic data. Additionally, the method and system for identifying an undifferentiated object in a script used to access a user interface (UI) may be downloaded as a computer program product transferred from a server or remote computer to a requesting or client device by way of machine readable data signals embodied in a carrier wave or other propagation medium.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A computer-implemented method, comprising:
receiving a user selection of a target object in a user interface, UI;
in response to the user section of the target object determining whether the target object has unique attributes as compared to attributes common to at least one other object in the UI;
in response to a determination that the target object lacks unique attributes:
identifying a second target object lacking unique attributes in the UI as an intermediate reference object;
identifying a unique object with unique attributes in the UI; defining a unique-intermediate relationship between the unique object and the intermediate reference object, wherein the unique object references the intermediate reference object;
defining an intermediate-target relationship between the intermediate reference object and the target object, wherein the intermediate reference object references the target object; and
recording the unique-intermediate relationship and the intermediate-target relationship in a script configured to uniquely identify the target object.

2. The method of claim 1, wherein the unique-intermediate relationship and the intermediate-target relationship are defined by a structure of the UI.

3. The method of claim 1, wherein the unique-intermediate relationship and the intermediate-target relationship are selected from the group consisting of: the relationship defined by a visual structure of the UI, the relationship defined by a source code hierarchy of the UI, the relationship defined by a visual proximity relationship in the UI, the relationship defined by a development tool repository relationship recognized by a development tool used to create the UI, and the relationship defined by a static relationship in the UI.

4. The method of claim 1, wherein the unique object with unique attributes in the UI is selected by a user.

5. The method of claim 1, further comprising notifying a user of the target object's lack of unique attributes when the target object lacks unique attributes after being checked for unique attributes.

6. The method of claim 1, further comprising:
Finding, using a script, the unique object with unique attributes in the UI, wherein the unique object is defined in the script;
determining the unique-intermediate relationship and the intermediate-target relationship from the script; and
accessing the target object in the UI based on the unique-intermediate relationship and the intermediate-target relationship.

7. The method of claim 1, wherein identifying the unique object with unique attributes further comprises identifying the unique object using a pattern recognition process.

8. The method of claim 7, wherein the pattern recognition process identifies the intermediate reference object in a row of the target object.

9. The method of claim 1, wherein the unique object includes a plurality of objects, and the combination of the plurality of objects has combined unique attributes.

10. The method of claim 1, wherein the unique-intermediate relationship and the intermediate-target relationship are maintained when other objects are repositioned and reordered in the UI.

11. The method of claim 1, wherein the target object is an undifferentiated object as compared to other similar objects in a UI page.

12. The method of claim 1, wherein the undifferentiated object is a test object undifferentiated from other similar objects in the UI,
the script is a test script to access the test object, comprising:
the target object is a target test object in the UI; and
the test script is configured to access the target test object.

13. A system, comprising:
a display to display a user interface, UI;
an input device for selecting objects in the UI;
a processor to:
receive, from the input device, a user selection of a target object in the UI;
in response to the user selection of the target object, determine whether the target object has unique attributes as compared to attributes common to at least one other object in the UI,
in response to a determination that the target object lacks unique attributes:
identify a second target object lacking unique attributes in the UI as an intermediate reference object;
identify a unique object with unique attributes in the UI; define a unique-intermediate relationship between the unique object and the intermediate reference object, wherein the unique object references the intermediate reference object; and
define an intermediate-target relationship between the intermediate reference object and the target object, wherein the intermediate reference object references the target object; and
a recorder module to store the unique-intermediate relationship and the intermediate-target relationship in a script and to execute the script.

14. The system of claim 13, wherein the processor is configured to find the unique object with unique attributes in an UI, to determine the unique-intermediate relationship and the intermediate-target relationship, and to select the target object in the UI based on the unique-intermediate relationship and the intermediate-target relationship.

## Patentansprüche

1. Computerimplementiertes Verfahren, das Folgendes umfasst:
Empfangen einer Benutzerauswahl eines Zielobjekts in einer Benutzeroberfläche (*user interface* - UI); Bestimmen, als Reaktion auf den Benutzerabschnitt des Zielobjekts, ob das Zielobjekt im Vergleich zu Merkmalen, die wenigstens einem anderen Objekt in der UI gemein sind, eindeutige Merkmale aufweist;
als Reaktion auf ein Bestimmen, dass dem Zielobjekt eindeutige Merkmale fehlen: Identifizieren eines zweiten Zielobjekts in der UI, dem eindeutige Merkmale fehlen, als ein Zwischenreferenzobjekt;
Identifizieren eines eindeutigen Objekts mit eindeutigen Merkmalen in der UI;
Definieren einer eindeutigen Zwischenbeziehung zwischen dem eindeutigen Objekt und dem Zwischenreferenzobjekt, wobei das eindeutige Objekt auf das Zwischenreferenzobjekt Bezug nimmt;
Definieren einer Zwischenzielbeziehung zwischen dem Zwischenreferenzobjekt und dem Zielobjekt, wobei das Zwischenreferenzobjekt auf das Zielobjekt Bezug nimmt; und
Aufzeichnen der eindeutigen Zwischenbeziehung und der Zwischenzielbeziehung in einem Skript, das konfiguriert ist, das Zielobjekt eindeutig zu identifizieren.

2. Verfahren nach Anspruch 1, wobei die eindeutige Zwischenbeziehung und die Zwischenzielbeziehung durch eine Struktur der Ul definiert werden.

3. Verfahren nach Anspruch 1, wobei die eindeutige Zwischenbeziehung und die Zwischenzielbeziehung aus der Gruppe ausgewählt sind, die aus Folgendem besteht: der durch eine visuelle Struktur der Ul definierten Beziehung, der durch eine Quellcodehierarchie der Ul definierten Beziehung, der durch eine visuelle Näherungsbeziehung in der UI definierten Beziehung, der durch eine Entwicklungswerkzeug-Repository-Beziehung definierten Beziehung, die durch ein Entwicklungswerkzeug erkannt wird, das zum Erzeugen der UI verwendet wird, und der durch eine statische Beziehung in der UI definierten Beziehung.

4. Verfahren nach Anspruch 1, wobei das eindeutige Objekt mit eindeutigen Merkmalen in der UI von einem Benutzer ausgewählt ist.

5. Verfahren nach Anspruch 1, ferner umfassend das Benachrichtigen eines Benutzers über fehlende eindeutige Merkmale des Zielobjekts, wenn dem Zielobjekt eindeutige Merkmale fehlen, nachdem es auf eindeutige Merkmale geprüft wurde.

6. Verfahren nach Anspruch 1, ferner Folgendes umfassend:
Auffinden des eindeutigen Objekts mit eindeutigen Merkmalen in der UI unter Verwendung eines Skripts, wobei das eindeutige Objekt im Skript definiert ist;
Bestimmen der eindeutigen Zwischenbeziehung und der Zwischenzielbeziehung anhand des Skripts; und
Zugreifen auf das Zielobjekt in der UI auf der Grundlage der eindeutigen Zwischenbeziehung und der Zwischenzielbeziehung.

7. Verfahren nach Anspruch 1, wobei das Identifizieren des eindeutigen Objekts mit eindeutigen Merkmalen ferner das Identifizieren des eindeutigen Objekts unter Verwendung eines Mustererkennungsvorgangs umfasst.

8. Verfahren nach Anspruch 7, wobei der Mustererkennungsvorgang das Zwischenreferenzobjekt in einer Zeile des Zielobjekts identifiziert.

9. Verfahren nach Anspruch 1, wobei das eindeutige Objekt mehrere Objekte enthält und die Kombination der mehreren Objekte kombinierte eindeutige Merkmale aufweist.

10. Verfahren nach Anspruch 1, wobei die eindeutige Zwischenbeziehung und die Zwischenzielbeziehung beibehalten werden, wenn andere Objekte in der UI neu positioniert und neu angeordnet werden.

11. Verfahren nach Anspruch 1, wobei das Zielobjekt im Vergleich zu anderen ähnlichen Objekten in einer UI-Seite ein undifferenziertes Objekt ist.

12. Verfahren nach Anspruch 1, wobei das undifferenzierte Objekt ein Testobjekt ist, das von anderen ähnlichen Objekten in der UI undifferenziert ist,
das Skript ein Testskript zum Zugreifen auf das Testobjekt ist, Folgendes umfassend: das Zielobjekt ist ein Zieltestobjekt in der UI; und das Testskript ist konfiguriert, auf das Zieltestobjekt zuzugreifen.

13. System, Folgendes umfassend:
eine Anzeige zum Anzeigen einer Benutzeroberfläche (UI); ein Eingabegerät zum Auswählen von Objekten in der UI; einen Prozessor zum:
Empfangen einer Benutzerauswahl eines Zielobjekts in der UI von dem Eingabegerät;
Bestimmen, als Reaktion auf die Benutzerauswahl des Zielobjekts, ob das Zielobjekt im Vergleich zu Merkmalen, die wenigstens einem anderen Objekt in der UI gemein sind, eindeutige Merkmale aufweist;
als Reaktion auf ein Bestimmen, dass dem Zielobjekt eindeutige Merkmale fehlen:
Identifizieren eines zweiten Zielobjekts in der UI, dem eindeutige Merkmale fehlen, als ein Zwischenreferenzobjekt;
Identifizieren eines eindeutigen Objekts mit eindeutigen Merkmalen in der UI;
Definieren einer eindeutigen Zwischenbeziehung zwischen dem eindeutigen Objekt und dem Zwischenreferenzobjekt, wobei das eindeutige Objekt auf das Zwischenreferenzobjekt Bezug nimmt; und Definieren einer Zwischenzielbeziehung zwischen dem Zwischenreferenzobjekt und dem Zielobjekt, wobei das Zwischenreferenzobjekt auf das Zielobjekt Bezug nimmt; und
ein Aufzeichnungsmodul zum Speichern der eindeutigen Zwischenbeziehung und der Zwischenzielbeziehung in einem Skript und zum Ausführen des Skripts.

14. System nach Anspruch 13, wobei der Prozessor konfiguriert ist, das eindeutige Objekt mit eindeutigen Merkmalen in einer UI aufzufinden, die eindeutige Zwischenbeziehung und die Zwischenzielbeziehung zu bestimmen und das Zielobjekt in der UI auf der Grundlage der eindeutigen Zwischenbeziehung und der Zwischenzielbeziehung auszuwählen.

## Revendications

1. Procédé mis en oeuvre par ordinateur, consistant :
à recevoir une sélection d'utilisateur d'un objet cible dans une interface utilisateur, IU ;
en réponse à la sélection d'utilisateur de l'objet cible, à déterminer si l'objet cible possède des attributs uniques par rapport aux attributs communs à au moins un autre objet dans l'IU ;
en réponse à une détermination que l'objet cible est dépourvu d'attributs uniques :
à identifier un second objet cible dépourvu d'attributs uniques dans l'IU en tant qu'objet de référence intermédiaire ;
à identifier un objet unique avec des attributs uniques dans l'IU ;
à définir une relation unique-intermédiaire entre l'objet unique et l'objet de référence intermédiaire, dans lequel l'objet unique fait référence à l'objet de référence intermédiaire ;
à définir une relation intermédiaire-cible entre l'objet de référence intermédiaire et l'objet cible, dans lequel l'objet de référence intermédiaire fait référence à l'objet cible ; et
à enregistrer la relation unique-intermédiaire et la relation intermédiaire-cible dans un script configuré pour identifier de manière unique l'objet cible.

2. Procédé selon la revendication 1, dans lequel la relation unique-intermédiaire et la relation intermédiaire-cible sont définies par une structure de l'IU.

3. Procédé selon la revendication 1, dans lequel la relation unique-intermédiaire et la relation intermédiaire-cible sont choisies dans le groupe constitué de : la relation définie par une structure visuelle de l'IU, la relation définie par une hiérarchie de code source de l'IU, la relation définie par une relation de proximité visuelle dans l'IU, la relation définie par une relation de référentiel d'outil de développement reconnue par un outil de développement utilisé pour créer l'IU, et la relation définie par une relation statique dans l'IU.

4. Procédé selon la revendication 1, dans lequel l'objet unique avec des attributs uniques dans l'IU est sélectionné par un utilisateur.

5. Procédé selon la revendication 1, comprenant en outre la notification à un utilisateur du défaut d'attributs uniques de l'objet cible lorsque l'objet cible est dépourvu d'attributs uniques après réalisation de la vérification des attributs uniques.

6. Procédé selon la revendication 1, consistant également :
à trouver, en utilisant un script, l'objet unique avec des attributs uniques dans l'IU, dans lequel l'objet unique est défini dans le script ;
à déterminer la relation unique-intermédiaire et la relation intermédiaire-cible à partir du script ; et
à accéder à l'objet cible dans l'IU en fonction de la relation unique-intermédiaire et de la relation intermédiaire-cible.

7. Procédé selon la revendication 1, dans lequel l'identification de l'objet unique avec des attributs uniques comprend en outre l'identification de l'objet unique en utilisant un processus de reconnaissance de formes.

8. Procédé selon la revendication 7, dans lequel le processus de reconnaissance de formes identifie l'objet de référence intermédiaire dans une rangée de l'objet cible.

9. Procédé selon la revendication 1, dans lequel l'objet unique inclut une pluralité d'objets, et la combinaison de la pluralité d'objets possède des attributs uniques combinés.

10. Procédé selon la revendication 1, dans lequel la relation unique-intermédiaire et la relation intermédiaire-cible sont maintenues lorsque d'autres objets sont repositionnés et réordonnés dans l'IU.

11. Procédé selon la revendication 1, dans lequel l'objet cible est un objet indifférencié par rapport à d'autres objets similaires dans une page d'IU.

12. Procédé selon la revendication 1, dans lequel l'objet indifférencié est un objet de test indifférencié par rapport à d'autres objets similaires dans l'IU,
le script est un script de test pour accéder à l'objet de test, comprenant :
l'objet cible est un objet de test cible dans l'IU ; et
le script de test est configuré pour accéder à l'objet de test cible.

13. Système comprenant :
un écran pour afficher une interface utilisateur, IU ;
un dispositif d'entrée pour sélectionner des objets dans l'IU ;
un processeur pour :
recevoir, à partir du dispositif d'entrée, une sélection par l'utilisateur d'un objet cible dans l'IU ;
en réponse à la sélection par l'utilisateur de l'objet cible, déterminer si l'objet cible possède des attributs uniques par rapport aux attributs communs à au moins un autre objet dans l'IU,
en réponse à une détermination que l'objet cible est dépourvu d'attributs uniques :
identifier un second objet cible dépourvu d'attributs uniques dans l'IU en tant qu'objet de référence intermédiaire ;
identifier un objet unique avec des attributs uniques dans l'IU ;
définir une relation unique-intermédiaire entre l'objet unique et l'objet de référence intermédiaire, dans lequel l'objet unique fait référence à l'objet de référence intermédiaire ; et
définir une relation intermédiaire-cible entre l'objet de référence intermédiaire et l'objet cible, dans lequel l'objet de référence intermédiaire fait référence à l'objet cible ; et
un module enregistreur pour stocker la relation unique-intermédiaire et la relation intermédiaire-cible dans un script et pour exécuter le script.

14. Système selon la revendication 13, dans lequel le processeur est configuré pour trouver l'objet unique avec des attributs uniques dans une IU, pour déterminer la relation unique-intermédiaire et la relation intermédiaire-cible, et pour sélectionner l'objet cible dans l'IU basé sur la relation unique-intermédiaire et la relation intermédiaire-cible.
